# EUROPÄISCHE PATENTSCHRIFT

(11) **EP 1 063 432 B1**
(45) Veröffentlichungstag und Bekanntmachung des Hinweises auf die Patenterteilung: **13.11.2002**
(21) Anmeldenummer: 00112738.0
(22) Anmeldetag: 16.06.2000
(51) Int. Cl.: F16B 5/06

(54) **Zweiteilige Klammer zur Verbindung von zwei Platten mit Einschluss einer Zwischenplatte**
Two part fastener for coupling two panels and an intermediate plate
Elément de fixation en deux parties pour la fixation de deux panneaux et une plaque intermédiaire

(30) Priorität: 23.06.1999 DE 19928706
(43) Veröffentlichungstag der Anmeldung: 27.12.2000
(73) Patentinhaber: A. Raymond & Cie, F-38028 Grenoble-Cédex (FR)
(72) Erfinder: Happle, Wolfgang, 79618 Rheinfelden (DE); Schweizer, Karl-Heinz, 79541 Lörrach-Brombach (DE)
(74) Vertreter: Kirchgaesser, Johannes, Dipl.-Ing.

(56) Entgegenhaltungen:
- EP-A- 0 672 836
- GB-A- 2 082 668
- US-A- 4 668 145
- US-A- 4 778 320

## Beschreibung

Die Erfindung betrifft eine zweiteilige Klammer zur Verbindung von zwei Platten mit Einschluß einer Zwischenplatte. Diese Klammer dient vorzugsweise zur Verbindung einer Türaußenplatte mit der Türverkleidungsplatte, wobei zwischen beiden Platten eine Schallisolierungsplatte vorgesehen ist, welche auf der Türaußenplatte mit verankert wird.

Die Erfindung geht hierbei aus von einer aus EP - A - 0 672 836 bekannten zweiteiligen Klammer, welche aus einem Verankerungsteil und einem mit diesem druckknopfartig verbindbaren Halteteil besteht. Das Verankerungsteil besitzt eine Auflageplatte, an welcher nach der einen Seite ein Ankerfuß zur Befestigung im Loch der einen Trägerplatte und nach der anderen Seite das Bolzenteil einer Druckknopfverbindung angeformt sind. Das Halteteil hingegen besteht aus einer Hülse mit nach innen abstehenden Rastvorsprüngen zur Aufnahme des Bolzenteils und zwei im Abstand voneinander angeformten Flanschen, welche zum Einsatz des Halteteils in einer entsprechenden Aufnahmeöffnung der Gegenplatte ausgebildet sind.

Aufgabe der Erfindung ist es, die Klammer so zu gestalten, daß mit dieser gleichzeitig eine Zwischenplatte auf der einen Trägerplatte unter Toleranzausgleich verankert werden kann, und zwar derart, daß die Zwischenplatte beim Lösen bzw. Abziehen der Gegenplatte zusammen mit dem Verankerungsteil an der Trägerplatte fest verankert bleibt.

Diese Aufgabe wird bei der vorgenannten Klammer im wesentlichen durch die im Anspruch 1 angegebenen Merkmale gelöst. Hierbei dienen die Schnapphaken zum Verbinden der Zwischenplatte mit der Trägerplatte, sobald der Ankerfuß in das Loch dieser Trägerplatte eingesteckt und verrastet ist, während sich die Federschenkel nach dem Aufdrücken des Halteteils auf das Druckknopfteil des Verankerungsteils elastisch auf der Innenseite der Isolierplatte andrücken. Auf diese Weise ist sichergestellt, daß die Isolierplatte im Einsatz zweimal gegen die Trägerplatte angedrückt wird.

In der Zeichnung ist ein bevorzugtes Ausführungsbeispiel der Erfindung dargestellt, welches nachfolgend näher erläutert werden soll. Es zeigt:
- Fig. 1: das Verankerungsteil der zweiteiligen Klammer in Seitenansicht im vormontierten Zustand mit der Trägerplatte und daraufliegender Isolierplatte,
- Fig. 2: das zugehörige Halteteil im Schnitt, welches in der Aufnahmeöffnung der Gegenplatte eingebaut ist, vor der Verbindung mit dem Verankerungsteil und
- Fig. 3: die beiden Klammerteile mit den zu verbindenden Platten und der Zwischenplatte im zusammengefügten Zustand.

Die zweiteilige Klammer dient zur Verbindung von zwei Platten 1 und 2 unter Einschlüß einer Zwischenplatte 3. Die Klammer besteht hierbei aus einem Verankerungsteil 4 sowie einem Halteteil 5, welches mit diesem unter Toleranzausgleich aller drei Platten druckknopfartig verbindbar ist

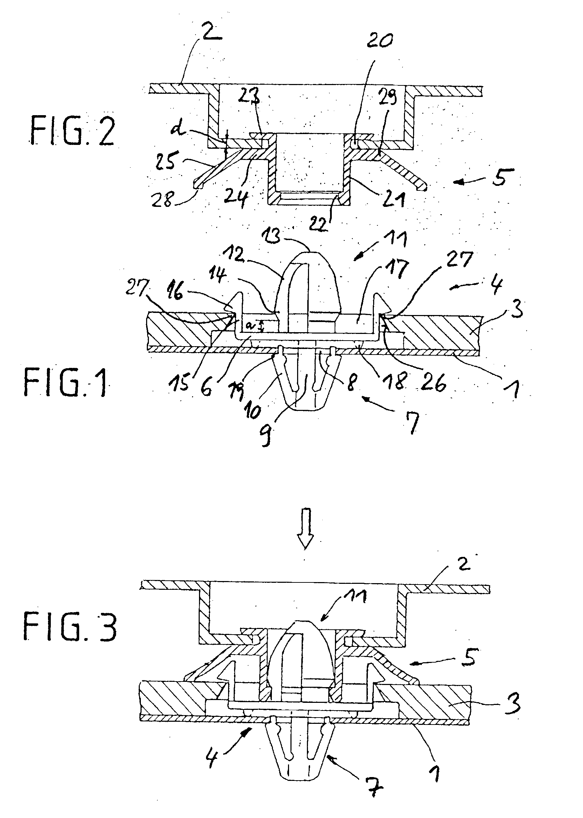

Wie aus **Figur 1** ersichtlich, besitzt das Verankerungsteil 4 eine Auflageplatte 6, an welcher nach der einen Seite ein Ankerfuß 7 zur Befestigung im Loch 8 der Trägerplatte 1 angeformt ist. Dieser Ankerfuß 7 besteht im wesentlichen aus einem von der Auflageplatte 6 rechtwinklig abstehenden, im Querschnitt rechteckigen Schaft 9, an dessen freien Ende schräg nach außen abstehende, zur Platte 6 gerichtete Stützbeine 10 elastisch zusammendrückbar angeformt sind.

Auf der anderen Seite der Auflageplatte 6 ist ein Bolzenteil 11 einer Druckknopfverbindung angeformt, wobei das Bolzenteil 11 im vorliegenden Ausführungsbeispiel aus drei von der Halteplatte 6 etwa rechtwinklig abstehenden, zueinander parallel verlaufenden Haltestegen 12 besteht, welche an ihrem freien Ende 13 hin bogenförmig zusammengeführt sind. Im Abstand "a" über der Halteplatte 6 weisen die Haltestege 12 nach außen abstehende Rastvorsprünge 14 auf, welche sich zur Halteplatte 6 hin schräg nach innen verjüngen.

Auf der gleichen Seite der Auflageplatte 6 sind im Randbereich zwei diametral gegenüberliegende, federnd zusammendrückbare Schnapphaken 15 etwa rechtwinklig angeformt, welche an ihren freien Enden nach außen gerichtete Rastnasen 16 aufweisen. Diese Schnapphaken 15 sind dazu bestimmt, ein Durchgangsloch 17 der Zwischenplatte 3 zu durchdringen, um sich im ersten Montageschritt mit ihren Rastnasen 16 auf dem Rand 27 des Durchgangsloches 17 elastisch abzustützen.

Im zweiten Montageschritt wird dann die Zwischenplatte 3 fest auf die Trägerplatte 1 gedrückt, nachdem der Ankerfuß 7 das Loch 8 der Trägerplatte 1 durchdrungen hat und die Stützbeine 10 mit ihren Stützfüßen 19 auf der Rückseite der Trägerplatte 1 wieder auseinandergefedert sind und sich dort verankert haben. Die Innenwand 26 des Durchgangslochs 17 verläuft hierbei vom Lochrand 27 schäg nach außen, so daß die Schnapphaken 15 unmittelbar am Übergang zu den Rastnasen 16 am Lochrand 27 aufliegen. Dadurch stehen die Schnapphaken 15 mit ihrer vollen Biegelänge für den Toleranzausgleich zwischen den Durchgangslöchern 8 und 17 zur Verfügung.

Zur wasserdichten Auflage der Halteplatte 6 auf der Trägerplatte 1 und auch zum Ausgleich von Fertigungstoleranzen ist an der Unterseite der Auflageplatte 6 ein im Querschnitt halbkreisförmiger Dichtring 18 vorgesehen, welcher aus weichelastischem Kunststoff besteht und vorzugsweise im gleichen Abspritzverfahren als zweite Komponente an die Halteplatte 6 angespritzt ist.

**Figur 2** zeigt das zugehörige Halteteil 5, welches in einer Aufnahmeöffnung 20 der Gegenplatte 2 eingebaut ist. Dieses Halteteil 2 besteht aus einer Hülse 21, an deren unterem, dem Verankerungsteil 4 zugekehrten Rand zur druckknopfartigen Verbindung mit dem Bolzenteil 11 ein nach innen abstehender Rastring 22 angeformt ist. Am oberen, entgegengesetzten Ende der Hülse sind zwei Flansche 23 und 24 im Abstand der Dicke "d" der Gegenplatte 2 angeformt, mit welchen das Halteteil 5 in der Aufnahmeöffnung 20 einsetzbar und unter Toleranzausgleich festlegbar ist.

Der zum anderen Ende der Hülse 21 näher gelegene Flansch 24 weist zwei diametral gegenüberliegende Federschenkel 25 auf, welche am Rand 29 des Flansches 24 angeformt und schräg von der Hülse 21 weggerichted sind und dabei mit Ihren Auflageenden 28 über die Rastnasen 16 hinausragen. Dadurch wird erreicht, daß die Federschenkel 25 beim Aufdrücken des Halteteils 5 auf das Verankerungsteil 4 und Einrasten des Rastringes 22 an den Rastvorsprüngen 14 sich federnd auf der Zwischenplatte 3 abstützen **(Figur 3 ).**

Dadurch wird die Zwischenplatte 3 beim Zusammenbau der beiden Außenplatten 1 und 2 zusätzlich auf die Trägerplatte 1 angedrückt und erschütterungsfrei gehalten. Aber auch beim Abziehen des Halteteils 5 vom Bolzenteil 11 wird die Zwischenplatte 3 durch die Schnapphaken 15 des Verankerungsteils 4 zuverlässig an der Trägerplatte 1 festgehalten.

## Patentansprüche

1. Zweiteilige Klammer zur Verbindung einer Trägerplatte (1) mit einer Gegenplatte (2) mit Einschluß einer Zwischenplatte (3), bestehend aus einem Verankerungsteil ( 4 ) mit Auflageplatte ( 6 ) und Ankerfuß ( 7 ) zur Befestigung im Loch ( 8 ) der einen Trägerplatte ( 1 ) und einem mit dem Verankerungsteil ( 4 ) druckknopfartig verbindbaren Halteteil ( 5 ) zum Einsatz in einer Aufnahmeöffnung ( 20 ) der Gegenplatte ( 2 ) **dadurch gekennzeichnet, daß** im Randbereich der Auflageplatte ( 6 ) des Verankerungsteils ( 4 ) mindestens zwei diametral gegenüberliegende Schnapphaken (15) mit nach außen gerichteten Rastnasen ( 16 ) rechtwinklig angeformt sind, welche im montierten Zustand ein Loch ( 17 ) der Zwischenplatte ( 3 ) durchdringen und dabei einen Lochrand ( 27 ) elastisch hintergreifen, und daß am Halteteil ( 5 ) mindestens zwei diametral gegenüberliegende Federschenkel ( 25 ) zur elastischen Abstützung auf der Zwischenplatte ( 3 ) angeformt sind.

2. Zweiteilige Klammer nach Anspruch 1, **dadurch gekennzeichnet, daß** eine Innenwand ( 26 ) des Lochs ( 17 ) in der Zwischenplatte ( 3 ) vom Lochrand ( 27 ) schräg nach außen verläuft, so daß die Schnapphaken ( 15 ) unmittelbar am Übergang zu den Rastnasen (16) am Lochrand ( 27 ) anliegen.

3. Zweiteilige Klammer nach Anspruch 1 oder 2, wobei das Halteteil ( 5 ) aus einer Hülse ( 21 ) besteht, an deren unteren, dem Verankerungsteil ( 4 ) zugekehrten Rand ein nach innen abstehender Rastring ( 22 ) angeformt ist und an deren oberen Ende zwei nach außen gerichtete Flansche ( 23 und 24 ) im Abstand der Dicke "d" der Gegenplatte ( 3 ) voneinander angesetzt sind, **dadurch gekennzeichnet, daß** die Federschenkel ( 25 ) am Rand ( 29 ) des zu den Rastringen ( 22 ) näher gelegenen Flansches (24) angesetzt und schräg von der Hülse ( 21 ) weg gerichtet sind.

4. Zweiteilige Klammer nach Anspruch 3, **dadurch gekennzeichnet, daß** Auflageenden ( 28 ) der Federschenkel ( 25 ) beim Aufdrücken des Halteteils ( 5 ) auf den Verankerungsteil ( 4 ) sich federnd auf der Zwischenplatte ( 3 ) abstützen.

5. Zweiteilige Klammer nach Anspruch 4, **dadurch gekennzeichnet, daß** die Auflageenden ( 28 ) der Federschenkel ( 25 ) über die Rastnasen ( 16 ) hinausragen.

6. Zweiteilige Klammer nach einem der Ansprüche 1. bis 5, **dadurch gekennzeichnet, daß** am Verankerungsteil ( 4 ) an der in Richtung auf den Ankerfuß ( 7) zeigenden Seite der Auflageplatte ( 6 ) ein im Querschnitt halbkreisförmiger Dichtring (18) aus weich-elastischem Kunststoffmaterial angeformt ist.

## Claims

1. A two-part clip for connecting a carrier plate (1) to a counterpart plate (2) with the inclusion of an intermediate plate (3), comprising an anchoring portion (4) with a contact plate (6) and an anchor foot (7) for fixing in the hole (8) in the one carrier plate (1) and a holding portion (5) connectable press stud-like to the anchoring portion (4) for insertion in a receiving opening (20) in the counterpart plate (2) **characterised in that** at least two mutually oppositely disposed snap hooks (15) with outwardly directed retaining noses (16) are formed at a right angle on the contact plate (6) of the anchoring portion (4) in the edge region of the contact plate, which retaining noses (16) in the assembled condition pass through a hole (17) in the intermediate plate (3) and in so doing elastically engage behind an edge (27) of the hole, and that formed on the holding portion (5) are at least two diametrally opposite spring legs (25) for elastic support on the intermediate plate (3).

2. A two-part clip according to claim 1 **characterised in that** an inside wall (26) of the hole (17) in the intermediate plate (3) extends inclinedly outwardly from the edge (27) of the hole so that the snap hooks (15) bear against the edge (26) of the hole directly at the transition to the retaining noses (16).

3. A two-part clip according to claim 1 or claim 2 wherein the holding portion (5) comprises a sleeve (21), at the lower edge of which, which is towards the anchoring portion (4), is formed an inwardly projecting retaining ring (22), and at the upper end of which two outwardly directed flanges (23 and 24) are disposed at the spacing of the thickness 'd' of the counterpart plate (2) from each other, **characterised in that** the spring legs (25) are attached to the edge (29) of the flange (24) which is closer to the retaining rings (22) and are directed inclinedly away from the sleeve (21).

4. A two-part clip according to claim 3 **characterised in that** contact ends (28) of the spring legs (25) are supported resiliently on the intermediate plate (3) when the holding portion (5) is pressed on to the anchoring portion (4).

5. A two-part clip according to claim 4 **characterised in that** the contact ends (28) of the spring legs (25) project beyond the retaining noses (16).

6. A two-part clip according to one of claims 1 to 5 **characterised in that** a sealing ring (18) which is of semicircular cross-section and which comprises soft-elastic plastic material is formed on the anchoring portion (4) at the side of the contact plate (6), which points in a direction towards the anchor foot (7).

## Revendications

1. Agrafe en deux parties pour l'assemblage d'une plaque support (1) avec une plaque opposée (2) enserrant une plaque intermédiaire (3), se composant d'un élément d'ancrage (4) comprenant une plaque d'assise (6) et une patte d'ancrage (7) destinée à être insérée dans un trou (8) ménagé à cet effet dans une plaque support (1) et d'un élément de retenue (5) destiné à être assemblé selon le principe du bouton-pression avec l'élément d'ancrage (4) et à être introduit dans une ouverture de réception (20) de la plaque opposée (2), **caractérisée en ce que** dans la zone de rive de la plaque d'assise (6) de l'élément d'ancrage (4) deux crochets d'encliquetage (15) diamétralement opposés, munis d'ergots d'accrochage (16) orientés vers l'extérieur sont réalisés solidaire par moulage de celle-ci selon une disposition en angle droit qui, à l'état d'assemblage, traversent un trou (17) de la plaque intermédiaire (3) et viennent en l'occurrence cramponner par derrière de manière élastique le bord (27) du trou et **en ce qu'**au moins deux pattes élastiques (25) diamétralement opposées, destinées à prendre appui de manière élastique sur la plaque intermédiaire (3), sont réalisées solidaires par moulage de l'élément de retenue (5).

2. Agrafe en deux parties selon la revendication 1, **caractérisée en ce qu'**une paroi (26) du trou (17) ménagé dans la plaque intermédiaire (3) s'étend vers l'extérieur suivant une disposition oblique depuis le bord (27) du trou, ce qui fait que les crochets d'encliquetage (15) viennent en contact d'appui contre le bord (27) du trou directement au niveau de la zone de transition avec les ergots d'accrochage (16).

3. Agrafe en deux parties selon la revendication 1 ou 2, dont l'élément de retenue (5) se compose en l'occurrence d'une douille (21) au niveau du bord intérieur, orienté en direction de l'élément d'ancrage (4), de laquelle une bague d'accrochage (22) faisant saillie vers l'intérieur est réalisée solidaire par moulage et à l'extrémité supérieure de laquelle deux brides (23 et 24) orientées vers l'extérieur sont disposées écartées l'une de l'autre dans une proportion correspondant à l'épaisseur "d" de la plaque opposée (3), **caractérisée en ce que** les pattes élastiques (25) sont disposées sur le bord (29) de la bride (24) se trouvant la plus proche des bagues d'accrochage (22) et s'écartent de la douille (21) selon une disposition oblique.

4. Agrafe en deux parties selon la revendication 3, **caractérisée en ce que** des extrémités d'appui (28) des pattes élastiques (25) viennent s'appuyer de manière élastique sur la plaque intermédiaire (3) lorsqu'on emmanche par pression l'élément de retenue (5) sur l'élément d'ancrage (4).

5. Agrafe en deux parties selon la revendication 4, **caractérisée en ce que** les extrémités d'appui (28) des pattes élastiques (25) font saillie au-dessus des ergots d'accrochage (16).

6. Agrafe en deux parties selon l'une quelconque des revendications 1 à 5, **caractérisée en ce qu'**une bague d'étanchéité de section hémisphérique est réalisée, dans une matière plastique à cédage élastique souple, solidaire par moulage du côté de la plaque d'appui (6) orienté en direction de la patte d'ancrage(7).
